# EUROPEAN PATENT APPLICATION

(11) **EP 2 074 883 A2**
(43) Date of publication of application: **01.07.2009**
(21) Application number: 08100311.3
(22) Date of filing: 10.01.2008
(51) Int. Cl.: A01K 63/06

(54) **Aquarium lamp structure with heating function**

(30) Priority: 24.12.2007 TW 96149613
(71) Applicant: Prodisc Technology Inc., Taipei 248 (TW)
(72) Inventor: Teng, Kuo-Hsin, 248, Taipei (TW); Chen, Hon-Lun, 248, Taipei (TW)
(74) Representative: Lang, Christian

(57) **Abstract**

An aquarium lamp structure (10) with a heating function comprises a light source module (11) and a heat conducting element (12). The light source module has a housing (111) which has a first surface (112), and the heat conducting element has a first heat conductor (121) and a second heat conductor (122). The first heat conductor of the heat conducting element has a second surface (123) in heat conducting connection with the first surface (112) of the light source module while the second heat conductor (122) is in heat conducting connection with the first heat conductor (121) as a whole and protruding from the housing (111). On one hand, heat generated by the light source module is conducted away from the light source module through the heat conducting element; on the other hand, the heat generated by the light source module is used to heat water in an aquarium. The present invention not only solves a heat dissipation problem of the light source module, but also prevents a water temperature in the aquarium from being so low that aquatic creatures in the aquarium get sick due to heat loss.

## Description

### BACKGROUND OF THE INVENTION

### 1. Technical Field

The present invention relates to an aquarium lamp structure with a heating function, and more particularly to an aquarium lamp structure with a heating function for heating water in an aquarium.

### 2. Description of Related Art

Aquatic creatures are kept in an aquarium for people to enjoy the viewing of life in water at any time. However, all kinds of aquatic creatures have their own living conditions such as water temperature, lighting, water quality, etc. Take water temperature for example. With the change of seasons, water temperature in an aquarium can easily get too low in winter. Therefore, for aquatic creatures not resistant to low temperatures, an additional heater is needed for heating water in the aquarium to prevent the aquatic creatures from getting sick or even dying due to heat loss.

Furthermore, a lamp is usually used with an aquarium to simulate lighting in Nature. However, if a conventional lamp such as a fluorescent light tube or a halogen light tube is used for a prolonged period of time, water temperature in the aquarium may become too high after extended illumination by such lamps. This not only impacts the growth of aquatic creatures in the aquarium, the light tube in the lamp may also have a shortened service life as a result of high temperatures.

Therefore, present research objectives include: how to heat water in an aquarium without using an extra heater; how to prevent water temperature in an aquarium from rising too high after long-time illumination by a lamp; and how to improve a heat dissipation efficiency of a lamp so that the lamp will not have a shortened service life because of poor heat dissipation.

### SUMMARY OF THE INVENTION

The present invention provides an aquarium lamp structure with a heating function, wherein a first heat conductor of a heat conducting element is in heat conducting connection with a housing of a light source module, so that heat generated by the light source module can be timely conducted to a second heat conductor of the heat conducting element, while the second heat conductor also conducts heat into water in an aquarium to raise a water temperature in the aquarium. Therefore, a service life of the light source module will not be shortened by heat accumulated on the housing of the light source module. In addition, water in the aquarium can be heated to prevent aquatic creatures therein from getting sick due to heat loss.

To achieve this end, the aquarium lamp structure with a heating function of the present invention comprises: a light source module having a housing, wherein the housing has a first surface; and a heat conducting element having a first heat conductor and a second heat conductor, wherein the first heat conductor has a second surface in heat conducting connection with the first surface, and the second heat conductor is in heat conducting connection with the first heat conductor as a whole and protruding from the housing.

In the aforementioned aquarium lamp structure, the light source module can be a light-emitting diode light source module. Further in the aforementioned aquarium lamp structure, the first heat conductor can be a heat conducting plate; the second heat conductor can be a heat pipe or a loop heat pipe; and the second heat conductor can further comprises a plurality of cooling fins. Moreover, the aforementioned aquarium lamp structure can further comprise a heat dissipation element in heat conducting connection with a lower surface or a lateral surface of the second heat conductor.

The present invention can be implemented to at least provide the following advantageous effects:
1. Heat generated by the light source module is conducted through the heat conducting element into water in the aquarium for heating the water in the aquarium.
2. A light-emitting diode light source module can be used as the light source module, so that a water temperature in the aquarium will not become too high after prolonged illumination by the lamp.

The features and advantages of the present invention are disclosed in detail in the following description so that a person skilled in the art can understand the technical content of the present invention and put it into practice. A person skilled in the art can readily comprehend the objectives and advantages of the present invention by referring to the content disclosed herein, the appended Claims and the accompanying drawings.

### BRIEF DESCRIPTION OF THE DRAWINGS

Fig. 1A is a schematic view of an aquarium lamp structure with a heating function according to a first embodiment of the present invention.
Fig. 1B is an exploded cross-sectional view taken along a line A-A in Fig. 1A showing a light source module and a heat conducting element according to the present invention.
Fig. 2 is a schematic view of a second embodiment of the aquarium lamp structure with the heating function according to the present invention.
Fig. 3 is a schematic view of a third embodiment of the aquarium lamp structure with the heating function according to the present invention.
Fig. 4 is a schematic view of a fourth embodiment of the aquarium lamp structure with the heating function according to the present invention.

### DETAILED DESCRIPTION OF THE PREFERRED EMBODIMENT

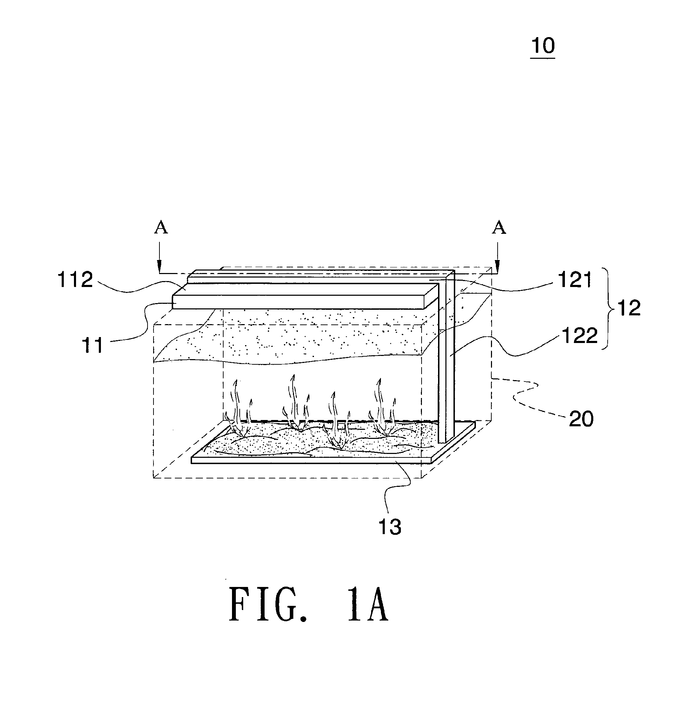

In the embodiment shown in Fig. 1A, the aquarium lamp structure 10 with the heating function comprises a light source module 11 and a heat conducting element 12.

The light source module 11 can be a light-emitting diode light source module, which is a cold light source and whose emitted light does not have a high temperature, so that a water temperature in the aquarium 20 will not become too high after prolonged illumination by the light source module 11. In addition, a user can adjust a color temperature or a brightness of light emitted from the light-emitting diode light source module to obtain the most appropriate color temperature or brightness. Furthermore, a color rendering index of a light-emitting diode light source module can be enhanced to make aquatic creatures in the aquarium 20 look more colorful.

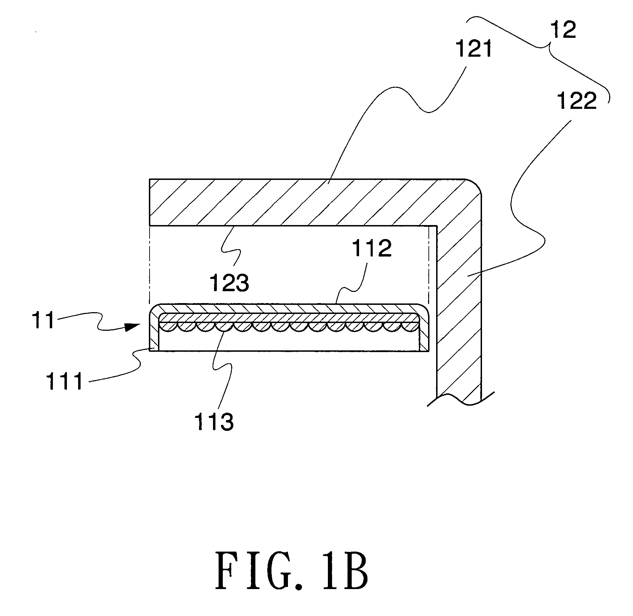

As shown in Fig. 1B, the light source module 11 has a housing 111 which has a first surface 112. A light-emitting element 113 of the light source module 11 is disposed in the housing 111. Now that a light-emitting diode can be used as the light-emitting element 113 and heat generated by a light-emitting diode tends to concentrate on a bottom side thereof, i.e., on the first surface 112 of the housing 111, the heat conducting element 12 is preferably in heat conducting connection with the first surface 112 of the housing 111, so that heat generated by the light source module 11 can be carried away from the housing 111 in a timely manner to prevent the heat from accumulating excessively on the housing 111 and therefore shortening a service life of the light source module 1 l.

As shown in Fig. 1A, the heat conducting element 12 has a first heat conductor 121 and a second heat conductor 122.

As shown in Figs. 1A and 1B, the first heat conductor 121, which can be a heat conducting plate, has a second surface 123 in heat conducting connection with the first surface 112 of the housing 111 for conducting heat generated by the light source module 11 away from the housing 111 of the light source module 11 through the first heat conductor 121. The second heat conductor 122 can be a heat pipe or a loop heat pipe. The second heat conductor 122 is in heat conducting connection with the first heat conductor 121 as a whole and protruding from the housing 111 of the light source module 11.

When heat generated by the light source module 11 is carried away from the housing 111 of the light source module 11 by the first heat conductor 121, which is in heat conducting connection with the second heat conductor 122 as a whole, the heat will be conducted to the second heat conductor 122. Since the second heat conductor 122 is protruding from the housing 111 of the light source module 11 and can be placed in water in the aquarium 20, the heat generated by the light source module 11 can be conducted to the water in the aquarium 20 through the second heat conductor 122, thereby increasing the water temperature in the aquarium 20.

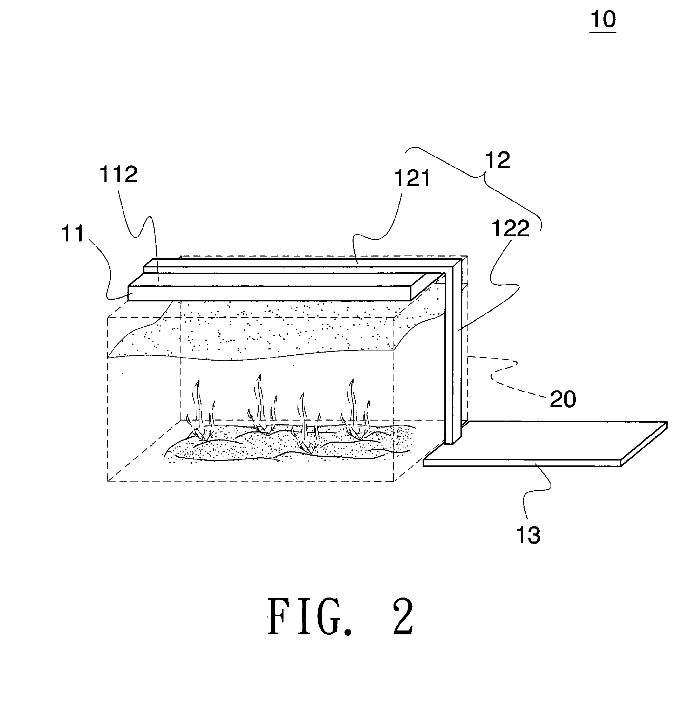

As shown in Fig. 2, during summer time, when water in the aquarium 20 no longer needs heating, the second heat conductor 122 can be removed from the aquarium 20 so that water therein is no longer heated. Meanwhile, the second heat conductor 122 can continue to dissipate heat through air, so that heat generated by the light source module 11 is successfully conducted away from the light source module 11.

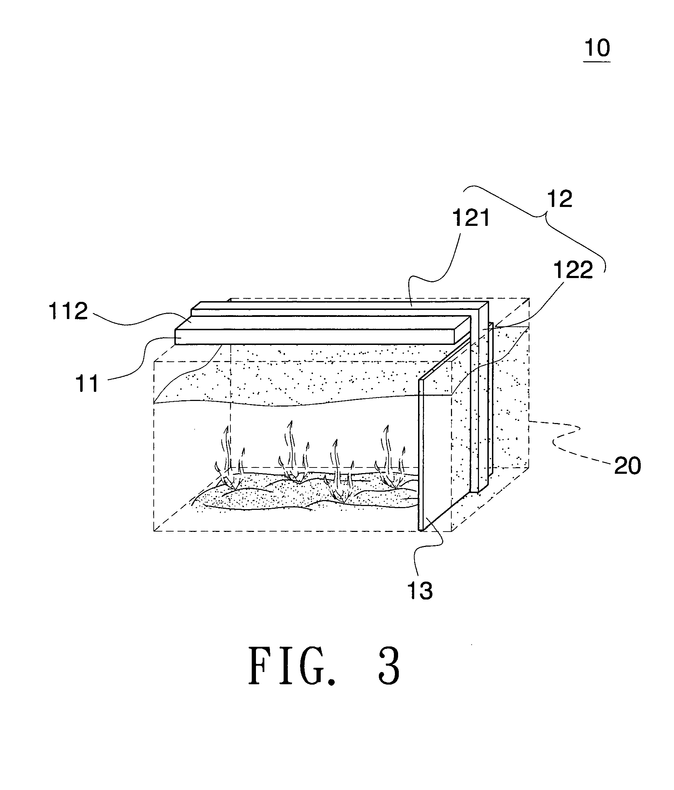

As shown in Figs. 1A and 3, the aquarium lamp structure 10 in this embodiment can be further provided with a heat dissipation element 13 to increase a heat dissipation speed of the heat conducting element 12. The heat dissipation element 13, which can be a heat dissipation plate, serves to accelerate heat dissipation from the heat conducting element 12 because the heat dissipation element 13 has a relatively large area for heat dissipation. As shown in Fig. 1A, the heat dissipation element 13 can be in heat conducting connection with a lower surface of the second heat conductor 122, or in heat conducting connection with the lower surface of the second heat conductor 122 in a rotatable manner, as shown in Fig. 2. When the second heat conductor 122 needs to be removed from the aquarium 20, the heat dissipation element 13 can be rotated so as to be also removed from the aquarium 20.

As shown in Fig. 3, the heat dissipation element 13 can also be in heat conducting connection with a lateral surface of the second heat conductor 122. When the water temperature in the aquarium 20 is too low, the second heat conductor 122 in heat conducting connection with the heat dissipation element 13 can be placed into the aquarium 20 to raise the water temperature in the aquarium 20. When the second heat conductor 122 needs to be removed from the aquarium 20, the heat dissipation element 13 can be removed along with the second heat conductor 122 and will not take too much space.

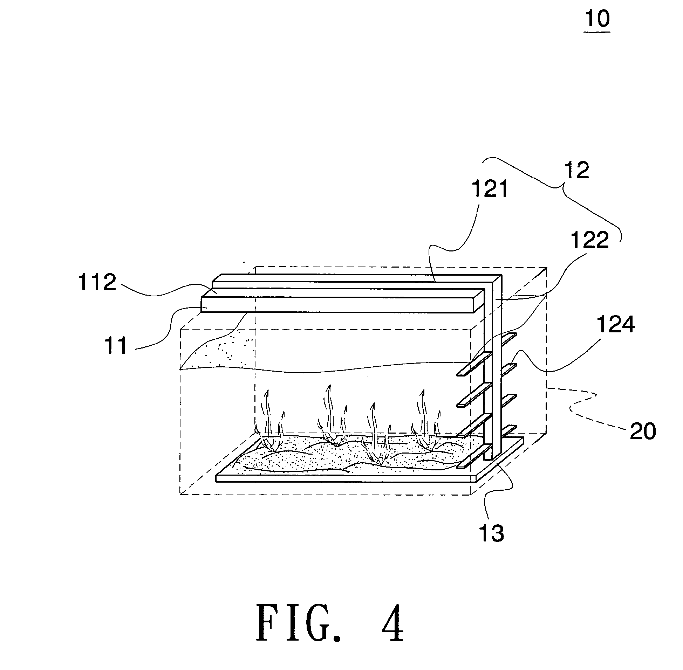

As shown in Fig. 4, to further increase the heat dissipation speed of the heat conducting element 12, the second heat conductor 122 can be provided with a plurality of cooling fins 124 in heat conducting connection with the second conductor 122 for increasing the area for heat dissipation, so that heat generated by the light source module 11 can be more rapidly conducted away from the housing 111 of the light source module 11. Moreover, the heat dissipation element 13 can still be connected to the lower surface of the second heat conductor 122 to accelerate heat dissipation.

The present invention not only raises the heat dissipation speed of the light source module 11, so that the service life thereof will not be shortened because of poor heat dissipation, but also uses the heat conducting element 12 to conduct heat generated by the light source module 11 into the aquarium 20, thereby heating the water in the aquarium 20, and increasing the water temperature therein to prevent aquatic creatures therein from getting sick or even dying due to heat loss.

It should be noted that the above-mentioned embodiments are described to explain the features of the present invention so that a person skilled in the art can understand the content of the present invention and put it into practice, and these embodiments are not intended to limit the scope of the present invention. Therefore, all equivalent modifications or alterations which do not depart from the spirit of the present invention are encompassed by the appended Claims.

## Claims

1. An aquarium lamp structure with a heating function comprising:
a light source module having a housing, wherein the housing has a first surface; and
a heat conducting element having:
a first heat conductor having a second surface, wherein the second surface is in heat conducting connection with the first surface; and
a second heat conductor in heat conducting connection with the first heat conductor as a whole and protruding from the housing.

2. The aquarium lamp structure as claimed in Claim 1, wherein the light source module is a light-emitting diode light source module.

3. The aquarium lamp structure as claimed in Claim 1, wherein the first heat conductor is a heat conducting plate and the second heat conductor is a heat pipe.

4. The aquarium lamp structure as claimed in Claim 1, wherein the first heat conductor is a heat conducting plate and the second heat conductor is a loop heat pipe.

5. The aquarium lamp structure as claimed in Claim 1, wherein the second heat conductor further comprises a plurality of cooling fins.

6. The aquarium lamp structure as claimed in Claim 1, further comprising a heat dissipation element in heat conducting connection with a lower surface of the second heat conductor.

7. The aquarium lamp structure as claimed in Claim 1, further comprising a heat dissipation element in heat conducting connection with a lateral surface of the second heat conductor.
